# EUROPÄISCHE PATENTSCHRIFT

(11) **EP 3 218 216 B1**
(45) Veröffentlichungstag und Bekanntmachung des Hinweises auf die Patenterteilung: **31.10.2018**
(21) Anmeldenummer: 15766542.3
(22) Anmeldetag: 22.09.2015
(51) Int. Cl.: B60J 7/00, B60J 1/20

(54) **ROLLOBAHN FÜR EINE SCHUTZVORRICHTUNG EINES FAHRZEUGINNENRAUMES**
ROLLER BLIND FOR A PROTECTION DEVICE OF A VEHICLE INTERIOR
VOLET ROULANT POUR UN DISPOSITIF DE PROTECTION D'UN INTÉRIEUR D'UN VÉHICULE

(30) Priorität: 12.11.2014 DE 102014223022
(43) Veröffentlichungstag der Anmeldung: 20.09.2017
(73) Patentinhaber: BOS GmbH & Co. KG, 73760 Ostfildern (DE)
(72) Erfinder: HINTENNACH, Markus, 73666 Baltmannsweiler (DE)
(74) Vertreter: Patentanwälte Ruff, Wilhelm, Beier, Dauster & Partner mbB
(86) Internationale Anmeldenummer: PCT/EP2015/071763
(87) Internationale Veröffentlichungsnummer: WO 2016/074840

(56) Entgegenhaltungen:
- EP-A1- 1 882 604
- WO-A1-2013/149917
- WO-A2-2006/053520
- DE-A1-102004 005 754

## Beschreibung

Die Erfindung betrifft eine Rollobahn für eine Schutzvorrichtung eines Fahrzeuginnenraumes mit einem flexiblen Flächengebilde, das zwischen einer ausgezogenen Schutzposition und einer kompakt abgelegten Ruheposition in einem Fahrzeuginnenraum verlagerbar ist, wobei dem Flächengebilde an seinen gegenüberliegenden Längsseiten seitliche Versteifungsbänder zugeordnet sind, die in montiertem Zustand in fahrzeugseitigen Führungsschienen längs verschiebbar geführt sind, wobei die Versteifungsbänder als Metallbänder ausgeführt sind. Aus der DE 10 2004 005754 A1 ist eine Rollobahn der eingangs genannten Art bekannt, die als nächster Stand der Technik angesehen wird.

Eine derartige Rollobahn ist für eine Beschattungsvorrichtung eines transparenten Glasdachbereichs eines Personenkraftwagens allgemein bekannt. Die Rollobahn ist als flexibles, textiles Flächengebilde gestaltet, das auf einer Wickelwelle auf- und abwickelbar gehalten ist. An gegenüberliegenden Längsseiten weist das Flächengebilde jeweils einen Seitenrand auf, in den ein Versteifungsband in Form eines Metallbandes eingenäht ist. Hierzu ist der entsprechende Seitenrand des Flächengebildes um das Versteifungsband umgeschlagen, so dass das als Metallband ausgeführte Versteifungsband in einer durch den Seitenrand des Flächengebildes gebildeten Tasche gehalten ist. Die Längsseiten des Flächengebildes sind in fahrzeugseitigen Führungsschienen seitlich des Glasdachbereichs längsverschiebbar geführt. Hierzu sind die Versteifungsbänder in die Führungsschienen eingeführt und quer zur Auszugrichtung des Flächengebildes formschlüssig in den Führungsschienen gehalten. Durch die seitliche Führung des Flächengebildes ist gewährleistet, dass das Flächengebilde quer zur Auszugrichtung gespannt gehalten ist und demzufolge zur Mitte hin nicht durchhängt.

Aufgabe der Erfindung ist es, eine Rollobahn der eingangs genannten Art zu schaffen, die eine robuste und langlebige Querspannfunktion in einer Schutzposition innerhalb eines Fahrzeuginnenraumes ermöglicht.

Diese Aufgabe wird dadurch gelöst, dass an den Längsseiten des Flächengebildes dünne Verbindungsstränge aus Metall befestigt sind, die über mehrere in Längsrichtung der Längsseiten beabstandete Schweißpunkte mit dem jeweiligen Metallband verschweißt sind. Dadurch wird eine besonders robuste Verbindung zwischen den Längsseiten des Flächengebildes und den als Metallbändern gestalteten Versteifungsbändern geschaffen. Die erfindungsgemäße Lösung eignet sich für Schutzvorrichtungen in einem Fahrzeuginnenraum, die zur Beschattung von Glasflächenbereichen wie insbesondere Glasdachbereichen, Seiten- oder Heckscheiben, oder zur horizontalen Laderaumabdeckung oder zur etwa vertikalen Laderaumabtrennung innerhalb des Fahrzeuginnenraumes vorgesehen sind.

Als dünner Verbindungsstrang aus Metall ist erfindungsgemäß ein Metallfaden oder Metalldraht oder ein dünner und schmaler Metallstreifen oder ein ähnlich gestaltetes dünnes Metallprofil vorgesehen. Vorzugsweise ist an jeder Längsseite jeweils lediglich ein einzelner Verbindungsstrang vorgesehen. Es ist auch möglich, auf jeder Längsseite zwei oder mehr dünne Verbindungsstränge zu befestigen. In vorteilhafter Weise erfolgt die Verschweißung mittels der entsprechenden Schweißpunkte mittels eines Laserschweißverfahrens, das Schweißpunkte durch entsprechende Lasersteuerung besonders exakt setzen kann.

In Ausgestaltung der Erfindung ist jedem Metallband jeweils ein Verbindungsstrang zugeordnet, wobei das Metallband und der Verbindungsstrang auf gegenüberliegenden Flächenseiten des Flächengebildes angeordnet und durch eine Materialstärke des Flächengebildes hindurch miteinander verbunden sind. Das Metallband und der Verbindungsstrang sind im Bereich jeder Längsseite des Flächengebildes somit ober- und unterseitig vorgesehen und durch das Flächengebilde hindurch mittels entsprechender Schweißpunkte miteinander verschweißt.

In weiterer Ausgestaltung der Erfindung ist jeder Verbindungsstrang als Metallfaden gestaltet, der über Textilbindungen mit dem Flächengebilde verbunden und insbesondere in einer Zick-Zack-Linie längs der Längsseite des Flächengebildes verlegt ist. Die Zick-Zack-Linie kann durch eine eckige oder durch eine runde alternierende Führung des Metallfadens nach Art einer Sinuskurve verlegt sein. Unter den Textilbindungen sind Verbindungen zwischen dem Metallfaden und dem Flächengebilde durch Vernähung mittels zusätzlichem Fadenmaterial oder auch durch Einbindung des Metallfadens bei der textilen Herstellung des Flächengebildes, insbesondere durch Einarbeitung in eine entsprechende Web- oder Maschenware, die das Flächengebilde bildet, zu verstehen.

In weiterer Ausgestaltung der Erfindung ist im Flächengebilde wenigstens eine in Längsrichtung erstreckte Reihe von Löchern vorgesehen, die der Metallfaden kreuzt und durch die hindurch der Metallfaden über entsprechende Schweißpunkte mit dem Metallband verbunden ist. Durch das Vorsehen der Löcher wird vermieden, dass das Setzen der Schweißpunkte eine thermische Beschädigung des Flächengebildes bewirken kann.

In weiterer Ausgestaltung der Erfindung sind der Metallfaden und das Metallband aus Stahl hergestellt. Hierdurch ist zum einen eine besonders gute materialschlüssige Bindung zwischen Metallfaden und Metallband erzielbar. Zum anderen weist Stahl eine besonders hohe Festigkeit auf, so dass die Rollobahn über einen langen Zeitraum eine gleichbleibende Querspannfunktion erfahren kann.

In weiterer Ausgestaltung der Erfindung ist das Flächengebilde als textiles Flächengebilde in Form einer Web- oder Maschenware oder als ein- oder mehrlagige Folienbahn gestaltet. Falls das Flächengebilde als mehrlagige Folienbahn gestaltet ist, sind entsprechende einzelne Folienlagen durch Kaschierung über die gesamte Fläche des Flächengebildes flächig miteinander verbunden.

In weiterer Ausgestaltung der Erfindung ist der Metallfaden in die Web- oder Maschenware textil eingearbeitet. Die Einarbeitung des Metallfadens kann bereits während der maschinellen Herstellung der Web- oder Maschenware erfolgen, oder der Metallfaden wird nachträglich in die Web- oder Maschenware eingezogen oder eingeschoben, die das Flächengebilde darstellt.

Die Erfindung betrifft auch eine Schutzvorrichtung für einen Fahrzeuginnenraum mit einer Rollobahn, die gemäß den vorstehenden Ausführungen gestaltet ist.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch eine Ausführungsform einer erfindungsgemäßen Rollobahn für eine Beschattungsvorrichtung eines Glasdachbereichs eines Personenkraftwagens,
- Fig. 2: schematisch einen Ausschnitt der mit der Rollobahn versehenen Beschattungsvorrichtung nach Fig. 1,
- Fig. 3: schematisch die Rollobahn nach Fig. 1 in teilweise auf einer Wickelwelle aufgewickeltem Zustand,
- Fig. 4: schematisch eine Explosionsdarstellung eines Längsseitenbereichs der Rollobahn nach den Fig. 1 bis 3 und
- Fig. 5: in vergrößerter schematischer Querschnittsdarstellung einen Ausschnitt der Rollobahn nach den Fig. 1 bis 4 im Bereich einer Verschweißung eines oberseitigen Metallstreifens mit einem unterseitigen Metallband.

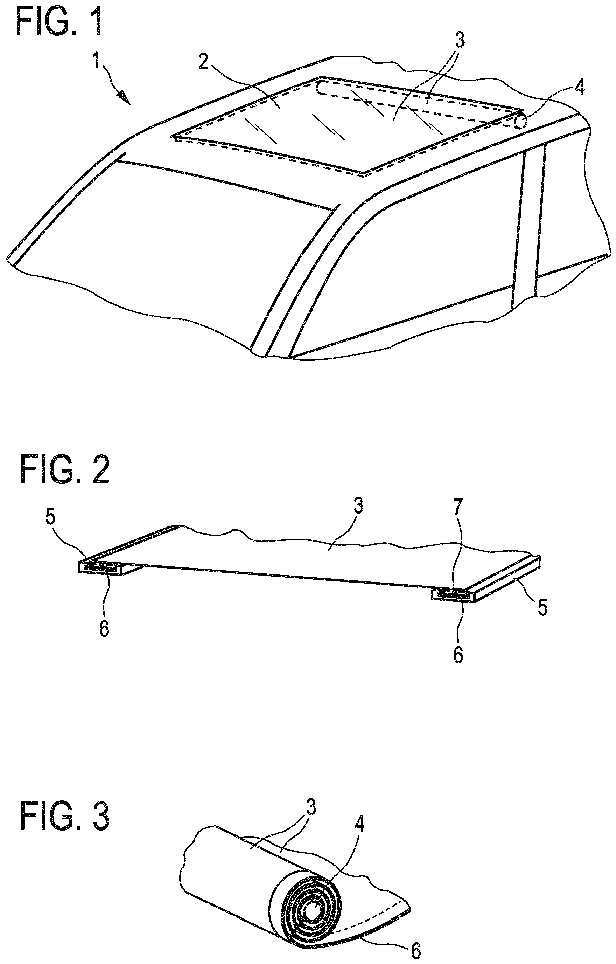

Ein Personenkraftwagen 1 nach Fig. 1 weist ein Fahrzeugdach auf, das mit einem Dachausschnitt versehen ist. Der Dachausschnitt ist durch ein bewegliches Glasdach 2 verschließbar oder freigebbar. Dem Glasdach 2 ist auf einer einem Fahrzeuginnenraum zugewandten Innenseite eine Beschattungsvorrichtung zugeordnet, um den Fahrzeuginnenraum gegenüber Sonnenstrahlung durch das Glasdach 2 hindurch abschatten zu können. Die Beschattungsvorrichtung weist eine Rollobahn auf, die ein flexibles Flächengebilde 3, vorliegend in Form einer mehrlagigen Folienbahn, umfasst. Das Flächengebilde 3 ist auf einer Wickelwelle 4 auf- und abwickelbar gelagert, die im Fahrzeuginnenraum unmittelbar hinter dem Glasdach 2 fahrzeugfest angeordnet und drehbar gelagert ist. Das Flächengebilde 3 weist in nicht näher dargestellter Weise an seinem in Auszugrichtung vorderen Stirnendbereich ein formstabiles Auszugprofil auf, das in fahrzeugfesten Führungsschienen längsverschiebbar gehalten ist.

Das Flächengebilde 3 ist an seinen gegenüberliegenden Längsseiten mit jeweils einem Versteifungsband 6 versehen, das eine ausreichende Flexibilität aufweist, um gemeinsam mit dem Flächengebilde 3 auf die Wickelwelle 4 aufgewickelt oder von dieser abgewickelt zu werden (Fig. 3). Jedes Versteifungsband 6 ist als Metallband ausgeführt und in jeweils einer fahrzeugfest im Fahrzeuginnenraum unterhalb jeweils eines Seitenrandes des Glasdachs 2 angeordneten Führungsschiene 5 längsverschiebbar geführt. Jedes Versteifungsband 6 ist mit der jeweiligen Längsseite des Flächengebildes 3 über die gesamte Länge des Flächengebildes 3 fest verbunden, so dass die beiden Versteifungsbänder 6 gemeinsam mit dem Flächengebilde 3 von der Wickelwelle 4 abgezogen oder auf diese aufgewickelt werden können.

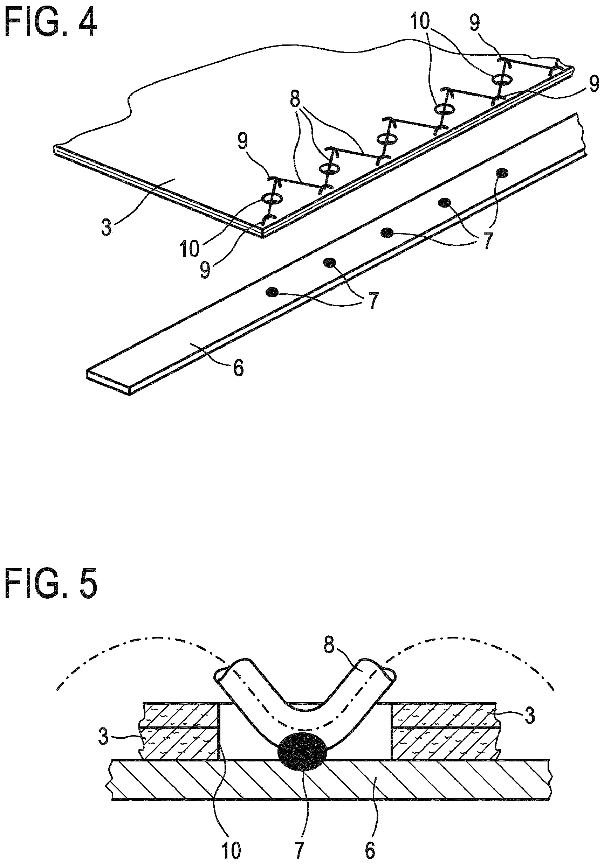

Die beiden Versteifungsbänder 6 sind mit den gegenüberliegenden Längsseiten des Flächengebildes 3 über eine Vielzahl von gleichmäßig über die Länge des jeweiligen Versteifungsbandes 6 erstreckten Schweißpunkten 7 verbunden. Hierzu weist das Flächengebilde 3 auf einer zu dem Versteifungsband 6 gegenüberliegenden Flächenseite einen Verbindungsstrang 8 in Form eines Metallfadens auf, der zick-zack-förmig entlang der Längsseite des Flächengebildes 3 geführt und über als Schlaufen gestaltete Nahtpunkte 9 mit dem Flächengebilde 3 vernäht ist. In dem Flächengebilde 3 ist im Bereich jeder Längsseite jeweils eine Reihe von Löchern 10 vorgesehen, die in Längsrichtung des Flächengebildes 3 in gleichmäßigen Abständen zueinander angeordnet sind und eine Materialstärke des Flächengebildes 3 vollständig durchdringen (Fig. 4 und 5). Die Zick-Zack-Führung des als Metallfaden ausgeführten Verbindungsstranges 8 im Bereich jeder der beiden Längsseiten des Flächengebildes 3 ist so gewählt, dass der Verbindungsstrang 8 jedes Loch 10 auf der dem Versteifungsband 6 gegenüberliegenden Flächenseite des Flächengebildes 3 kreuzt. Der Verbindungsstrang 8 ist als Stahlfaden oder als Stahldraht ausgeführt und wird im Bereich jedes Loches 10 mit dem ebenfalls aus Stahl bestehenden Versteifungsband 6 über die bereits beschriebenen Schweißpunkte 7 verschweißt. Die Schweißpunkte 7 werden durch Laserschweißung hochgenau koaxial zu den Löchern 10 des Flächengebildes 3 gesetzt. Der Energieeintrag durch die Laserschweißung erfolgt so genau und räumlich begrenzt, dass Ränder jedes Loches 10 durch die Schweißung nicht oder nicht nennenswert thermisch beansprucht werden, so dass keine Beschädigung des Flächengebildes 3 aufgrund der Verschweißungen eintritt. Beim dargestellten Ausführungsbeispiel ist der Verbindungsstrang 8 in Form des Metallfadens im Bereich der Oberseite des Flächengebildes 3 vorgesehen, wohingegen das Versteifungsband 6 komplementär gegenüberliegend auf der Unterseite des Flächengebildes 3 positioniert ist. Bei einer alternativen Ausführungsform der Erfindung ist das Versteifungsband 6 im Bereich der Oberseite und der mit dem Flächengebilde 3 vernähte Verbindungsstrang in Form des Metallfadens im Bereich der Unterseite des Flächengebildes positioniert. Die Verschweißung erfolgt in analoger Weise durch die Löcher 10 hindurch.

## Patentansprüche

1. Rollobahn für eine Schutzvorrichtung eines Fahrzeuginnenraumes mit einem flexiblen Flächengebilde (3), das zwischen einer ausgezogenen Schutzposition und einer kompakt abgelegten Ruheposition in einem Fahrzeuginnenraum verlagerbar ist, wobei dem Flächengebilde (3) an seinen gegenüberliegenden Längsseiten seitliche Versteifungsbänder (6) zugeordnet sind, die in montiertem Zustand in fahrzeugseitigen Führungsschienen (5) längsverschiebbar geführt sind, wobei die Versteifungsbänder (6) als Metallbänder ausgeführt sind, **dadurch gekennzeichnet, dass** an den Längsseiten des Flächengebildes (3) dünne Verbindungsstränge (8) aus Metall befestigt sind, die über mehrere in Längsrichtung der Längsseiten beabstandete Schweißpunkte (7) mit dem jeweiligen Metallband verschweißt sind.

2. Rollobahn nach Anspruch 1, **dadurch gekennzeichnet, dass** jedem Metallband jeweils ein Verbindungsstrang (8) zugeordnet ist, wobei das Metallband und der Verbindungsstrang (8) auf gegenüberliegenden Flächenseiten des Flächengebildes (3) angeordnet und durch eine Materialstärke des Flächengebildes (3) hindurch miteinander verbunden sind.

3. Rollobahn nach Anspruch 1 oder 2, **dadurch gekennzeichnet, dass** jeder Verbindungsstrang (8) als Metallfaden gestaltet ist, der über Textilbindungen (9) mit dem Flächengebilde (3) verbunden und insbesondere in einer Zick-Zack-Linie längs der Längsseite des Flächengebildes (3) verlegt ist.

4. Rollobahn nach einem der vorhergehenden Ansprüche, **dadurch gekennzeichnet, dass** im Flächengebilde (3) wenigstens eine in Längsrichtung erstreckte Reihe von Löchern (10) vorgesehen ist, die der Metallfaden (8) kreuzt, und durch die hindurch der Metallfaden (8) über entsprechende Schweißpunkte (7) mit dem Metallband (6) verbunden ist.

5. Rollobahn nach Anspruch 4, **dadurch gekennzeichnet, dass** der Metallfaden und das Metallband aus Stahl hergestellt sind.

6. Rollobahn nach einem der vorhergehenden Ansprüche, **dadurch gekennzeichnet, dass** das flexible Flächengebilde (3) als textiles Flächengebilde in Form einer Web- oder Maschenware oder als ein- oder mehrlagige Folienbahn gestaltet ist.

7. Rollobahn nach einem der vorhergehenden Ansprüche, **dadurch gekennzeichnet, dass** der Metallfaden in die Web- oder Maschenware textil eingearbeitet ist.

8. Schutzvorrichtung für einen Fahrzeuginnenraum mit einer Rollobahn, die nach einem der vorhergehenden Ansprüche ausgeführt ist.

## Claims

1. Roller blind sheet for a protective device of a vehicle interior compartment, comprising a flexible two-dimensional structure (3) which is displaceable between a pulled-out protective position and a compactly stored rest position in a vehicle interior, wherein the two-dimensional structure (3) is associated with lateral reinforcing tapes (6) on opposite longitudinal sides thereof, and in the assembled state said tapes are guided in vehicle-related guiding rails (5) to be lengthwise shiftable, wherein the reinforcing tapes (6) are embodied as metal tapes,
**characterized in that**
on the longitudinal sides of the two-dimensional structure (3) thin connecting strands (8) made of metal are fixed, which are welded to the respective metal tape using a plurality of welding spots (7) spaced along the longitudinal direction of the longitudinal sides.

2. Roller blind sheet according to claim 1, **characterized in that** each metal tape is associated with a respective connecting strand (8), wherein the metal tape and the connecting strand (8) are arranged on opposite surface sides of the two-dimensional structure (3) and connected to each other across and through a material thickness of the two-dimensional structure (3).

3. Roller blind sheet according to claim 1 or 2, **characterized in that** each connecting strand (8) is designed as a metal string which is connected to the two-dimensional structure (3) by textile weaves (9) and laid out along the longitudinal side of the two-dimensional structure (3), in particular in a zig-zag line.

4. Roller blind sheet according to any of the preceding claims, **characterized in that** at least one row of holes (10) extending in the longitudinal direction is provided in the two-dimensional structure (3), which holes are traversed by the metal string (8) and the metal string (8) is connected to the metal tape (6) by corresponding welding spots (7) through and across said holes.

5. Roller blind sheet according to claim 4, **characterized in that** the metal string and the metal tape are made of steel.

6. Roller blind sheet according to any of the preceding claims, **characterized in that** the two-dimensional structure (3) is a textile fabric in the form of a woven or knitted fabric, or in the form of a single-layer or multi-layer film sheet.

7. Roller blind sheet according to any of the preceding claims, **characterized in that** the metal string is incorporated into the woven or knitted fabric by textile techniques.

8. Protective device for a vehicle interior compartment, comprising a roller blind sheet embodied according to any of the preceding claims.

## Revendications

1. Store roulant pour un dispositif de protection d'un intérieur d'un véhicule avec une structure bidimensionnelle (3) flexible, déplaçable dans un intérieur de véhicule entre une position de protection étirée et une position de repos compactement entreposée, la structure bidimensionnelle (3) étant associée à des bandes renforçantes (6) latérales sur ses côtés longitudinaux opposés, et lesdites bandes à l'état assemblé sont guidées dans des rails de guidage (5) côté véhicule pour coulisser longitudinalement, les bandes renforçantes (6) étant sous forme de bandes métalliques,
**caractérisé en ce que**
des brins reliants (8) métalliques minces sont fixés sur les côtés longitudinaux de la structure bidimensionnelle (3), lesdits brins soudés à la bande métallique respective par le biais de plusieurs points de soudure (7) espacés le long de la direction longitudinale des côtés longitudinaux.

2. Store roulant selon la revendication 1, **caractérisé en ce que** chaque bande métallique est associée à un brin reliant (8) respectif, dans lequel la bande métallique et le brin reliant (8) sont arrangés sur des côtés de surface opposés de la structure bidimensionnelle (3) et sont connectés l'un à l'autre traversant une épaisseur de matériau de la structure bidimensionnelle (3).

3. Store roulant selon la revendication 1 ou 2, **caractérisé en ce que** chaque brin reliant (8) est configuré sous forme de fil métallique, connecté à la structure bidimensionnelle (3) par le biais des trames textiles (9) et étalé le long du côté longitudinal de la structure bidimensionnelle (3), en particulier en ligne de zigzag.

4. Store roulant selon l'une quelconque des revendications précédentes, **caractérisé en ce que** dans la structure bidimensionnelle (3) est prévu au moins une rangée de trous (10) s'étendant dans la direction longitudinale, les trous étant traversés par le fil métallique (8) et le fil métallique (8) connecté à la bande métallique (6) au travers des trous par le biais de points de soudure (7) correspondants.

5. Store roulant selon la revendication 4, **caractérisé en ce que** le fil métallique et la bande métallique sont fabriqués en acier.

6. Store roulant selon l'une quelconque des revendications précédentes, **caractérisé en ce que** la structure bidimensionnelle (3) flexible est un tissu textile configurée sous forme de tissu tissé ou de tissu tricoté, ou sous forme de feuille de pellicule à une couche ou à plusieurs couches.

7. Store roulant selon l'une quelconque des revendications précédentes, **caractérisé en ce que** le fil métallique est intégré dans le tissu tissé ou le tissu tricoté par des techniques textiles.

8. Dispositif de protection pour un intérieur de véhicule, comportant un store roulant réalisé selon l'une quelconque des revendications précédentes.
